# EUROPÄISCHE PATENTSCHRIFT

(11) **EP 2 051 894 B1**
(45) Veröffentlichungstag und Bekanntmachung des Hinweises auf die Patenterteilung: **10.02.2010**
(21) Anmeldenummer: 07729659.8
(22) Anmeldetag: 30.05.2007
(51) Int. Cl.: B60W 40/10

(54) **VERFAHREN UND VORRICHTUNG ZUM BETREIBEN EINES FAHRZEUGS**
METHOD AND APPARATUS FOR OPERATING A VEHICLE
PROCÉDÉ ET DISPOSITIF POUR L'EXPLOITATION D'UN VÉHICULE

(30) Priorität: 10.08.2006 DE 102006037531
(43) Veröffentlichungstag der Anmeldung: 29.04.2009
(73) Patentinhaber: Continental Automotive GmbH, 30165 Hannover (DE)
(72) Erfinder: ABELE, Andreas, 93092 Barbing (DE); FIEDLER, Jens, 93107 Thalmassing (DE); KRETSCHMANN, Matthias, 93047 Regensburg (DE)
(86) Internationale Anmeldenummer: PCT/EP2007/055245
(87) Internationale Veröffentlichungsnummer: WO 2008/017527

(56) Entgegenhaltungen:
- EP-A- 1 167 086
- EP-A2- 1 155 879
- GB-A- 2 398 846
- US-A- 5 388 658
- US-A- 5 802 491
- US-A1- 2004 172 181

## Beschreibung

Die Erfindung betrifft ein Verfahren und eine Vorrichtung zum Betreiben eines Fahrzeugs mit mehreren Rädern und diesen zugeordneten Radsensoren, deren Messsignale repräsentativ sind für winkelgeschwindigkeiten der jeweiligen Räder.

Der nächstliegende Stand der Technik ist in der GB 2 398 846 A zu sehen und zeigt ein Verfahren und eine Vorrichtung zum Betreiben eines Fahrzeugs mit mehreren Rädern und diesen zugeordneten Radsensoren, deren Messsignale repräsentativ sind für Winkelgeschwindigkeiten der jeweiligen Räder, bei dem:
- abhängig von den jeweiligen Messsignalen jeweilige charakteristische Werte für die Winkelgeschwindigkeit des jeweiligen Rades erfasst werden,
- die charakteristischen Werte in ein gemeinsames Bezugskoordinatensystem des Fahrzeugs transformiert werden abhängig von zumindest einem des Lenkwinkels oder der Gierrate,
- ein gemeinsamer Bezugswert abhängig von den transformierten charakteristischen Werten ermittelt wird.

Das Fahrverhalten eines Fahrzeugs wird anhand von Fahrzeugparametern wie der Lenkradwinkel, die Querbeschleunigung, die Längsbeschleunigung oder Längsverzögerung oder die Gierrate (Drehrate um die Hochachse des Fahrzeugs) bestimmt. Zur Klärung eines bestimmten Fahrverhaltens, beispielsweise der Fahrzeugstabilität bei verschiedenen Umgebungsbedingungen werden weitere Fahrzeugparameter wie die Längsgeschwindigkeit und der Lenkwinkel der Vorder- beziehungsweise Hinterräder erfasst.

Die Längsgeschwindigkeit des Fahrzeugs ist die Komponente der Fahrzeuggeschwindigkeit in Richtung der Längsachse des Fahrzeugs. Die Fahrzeuggeschwindigkeit wird ermittelt, in dem die Drehzahl der Räder des Fahrzeugs erfasst werden. Die Längsgeschwindigkeit des Fahrzeugs hat einen der größten Einflüsse auf die Fahrzeugstabilität und ist einer der wichtigsten Fahrzeugparameter des Fahrzeugs.

Die Aufgabe der Erfindung ist, ein Verfahren und eine Vorrichtung zum Betreiben eines Fahrzeugs mit mehreren Rädern zu schaffen, das beziehungsweise die einen Betrieb des Fahrzeugs ermöglichen.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren und eine korrespondierende Vorrichtung zum Betreiben eines Fahrzeugs mit mehreren Rädern und diesen zugeordneten Radsensoren, deren Messsignale repräsentativ sind für Winkelgeschwindigkeiten der jeweiligen Räder. Abhängig von den jeweiligen Messsignalen werden jeweilige charakteristische Werte für die Winkelgeschwindigkeit des jeweiligen Rades erfasst und die charakteristischen Werte werden abhängig von zumindest einem Wert des Lenkwinkels oder der Gierrate in ein gemeinsames Bezugskoordinatensystem des Fahrzeugs transformiert. Abhängig von den transformierten charakteristischen Werten wird ein gemeinsamer Bezugswert ermittelt. Abhängig von dem jeweiligen Verhältnis der transformierten charakteristischen Werte und des Bezugswertes werden jeweilige Zwischenskalierungswerte ermittelt. Abhängig von den Zwischenskalierungswerten werden jeweilige Skalierungswerte angepasst, wenn eine vorgegebene Bedingung erfüllt ist, die abhängt von der Gierrate und/oder dem Lenkwinkel.

Dies hat den Vorteil, dass ausgehend von charakteristischen Werten für die Winkelgeschwindigkeiten der jeweiligen Räder des Fahrzeugs, jeweilige Skalierungswerte für die jeweiligen Räder des Fahrzeugs angepasst werden, ohne dass weitere Größen ermittelt werden müssen. Ein weiterer Vorteil ist die geringe Anzahl von Werten, die angepasst werden müssen, nämlich allein die Skalierungswerte. All dies ist unabhängig von der Art des Fahrzeugs und gleichermaßen für ein Fahrzeug mit Vorderantrieb oder Hinterantrieb oder auch mit Vierradantrieb geeignet.

Vorteilhafterweise werden die jeweiligen Skalierungswerte abhängig von jeweiligen Zwischenskalierungswerten zeitnah zu einem Fahrzeugstart stärker angepasst als nach einer vorgegebenen Zeitdauer nach dem Fahrzeugstart. Dass heißt, dass die ersten nach dem Fahrzeugstart ermittelten jeweiligen Zwischenskalierungswerte bei der Berechnung der Skalierungswerte stärker berücksichtigt werden. Dies ermöglicht beispielsweise eine schnelle Feststellung eines Radwechsels direkt nach dem Fahrzeugstart. Im weiteren Betrieb des Fahrzeugs, werden die Skalierungswerte günstigerweise fortlaufend angepasst.

Vorteilhafterweise werden die transformierten charakteristischen Werte für die Winkelgeschwindigkeit des jeweiligen Rades des Fahrzeugs tiefpassgefiltert. Durch die Tiefpassfilterung werden die vorhergehenden transformierten charakteristischen Werte mitberücksichtigt. Abhängig von den tiefpassgefilterten transformierten charakteristischen Werten wird ein gemeinsamer Bezugswert ermittelt. Durch den gemeinsamen Bezugswert können die tiefpassgefilterten transformierten charakteristischen Werte relativ zueinander ermittelt werden.

Vorteilhafterweise werden die jeweiligen Zwischenskalierungswerte aus dem jeweiligen Verhältnis der transformierten charakteristischen Werte der Winkelgeschwindigkeit des jeweiligen Rades und des tiefpassgefilterten gemeinsamen Bezugswertes ermittelt. Die jeweiligen Zwischenskalierungswerte sind ein Maß für die Abweichungen der transformierten charakteristischen Werte relativ zueinander. Durch die Tiefpassfilterung der Bezugswerte werden einzelne ermittelte Bezugswerte unter Berücksichtigung vorhergehender Bezugswerte ermittelt.

Vorteilhafterweise werden die jeweiligen Zwischenskalierungswerte aus dem jeweiligen Verhältnis der tiefpassgefilterten transformierten charakteristischen Werte der Winkelgeschwindigkeit des jeweiligen Rades und des gemeinsamen tiefpassgefilterten Bezugswertes ermittelt. Durch das Verwenden der tiefpassgefilterten transformierten charakteristischen Werte der Winkelgeschwindigkeit des jeweiligen Rades, werden einzelne charakteristische Werte in Bezug auf vorhergehende ermittelte Werte in der Berechnung berücksichtigt. Durch die Tiefpassfilterung der Bezugswerte werden einzelne ermittelte Bezugswerte unter Berücksichtigung vorhergehender Bezugswerte ermittelt.

Vorteilhafterweise ist das Bezugskoordinatensystem, in das die jeweiligen charakteristischen Werte der Winkelgeschwindigkeiten des jeweiligen Rades transformiert werden, ein Schwerpunktkoordinatensystem des Fahrzeugs. Die Wahl des Schwerpunktkoordinatensystems als Bezugskoordinatensystem ermöglicht eine einfache Berechnung der jeweiligen transformierten charakteristischen Werte für die Winkelgeschwindigkeit des jeweiligen Rades.

Vorteilhafterweise werden die Skalierungswerte abhängig von den Zwischenskalierungswerten angepasst, wenn die vorgegebene Bedingung erfüllt ist, dass der Betrag der Gierrate kleiner als ein erster Schwellenwert ist. Durch diese Bedingung soll eine Aktualisierung der Skalierungswerte nur für Gierraten erfolgen, deren Betrag klein ist. Ist der Betrag der Gierrate größer als der erste Schwellenwert, befindet sich das Fahrzeug möglicherweise in einem Schleudervorgang.

Vorteilhafterweise werden die Skalierungswerte abhängig von den Zwischenskalierungswerten angepasst, wenn die vorgegebene Bedingung erfüllt ist, dass der Betrag des Lenkwinkels kleiner als ein zweiter Schwellenwert ist. Eine Aktualisierung der Skalierungswerte soll vermieden werden, wenn sich das Fahrzeug in einem Fahrzustand mit großem Lenkwinkel befindet. Ein solcher Fahrzustand wäre bei der Fahrt des Fahrzeugs durch eine enge Straßenkurve gegeben.

In einer bevorzugten Ausgestaltung werden abhängig von den jeweiligen Skalierungswerten und den zugeordneten charakteristischen Werten für die Winkelgeschwindigkeit des jeweiligen Rades, jeweilige skalierte Radgeschwindigkeiten für die Räder des Fahrzeugs ermittelt. Mit den skalierten Radgeschwindigkeiten wird die Genauigkeit der Ermittlung der Längsgeschwindigkeit des Fahrzeugs erhöht.

Vorteilhafterweise wird abhängig von den jeweiligen Skalierungswerten ermittelt, ob zumindest eines der Räder des Fahrzeugs ein Reserverad ist. Der Wert des Skalierungswertes allein ist ein ausreichendes Indiz dafür, dass ein Radwechsel vorgenommen wurde. Ein Reserverad wird unterschiedliche Skalierungswerte aufweisen als ein davor eingebautes Rad des Fahrzeugs.

Vorteilhafterweise wird abhängig von den jeweiligen Skalierungswerten ermittelt, ob bei zumindest einem der Räder des Fahrzeugs ein Druckverlust auftritt. Der Wert des Skalierungswertes allein ist ein ausreichendes Indiz dafür, dass sich der Zustand des betreffenden Rades des Fahrzeugs verändert hat.

Ausführungsbeispiele der Erfindung sind nachfolgend anhand der schematischen Zeichnungen näher erläutert.

In den Zeichnungen zeigen:
Figur 1A ein Fahrzeug mit einer Vorrichtung zum Betreiben des Fahrzeugs,
Figur 1B eine perspektivische Ansicht des Fahrzeugs,
Figur 2 ein Programm zum Betreiben eines Fahrzeugs,
Figur 3 ein weiteres Programm zum Betreiben des Fahrzeugs.

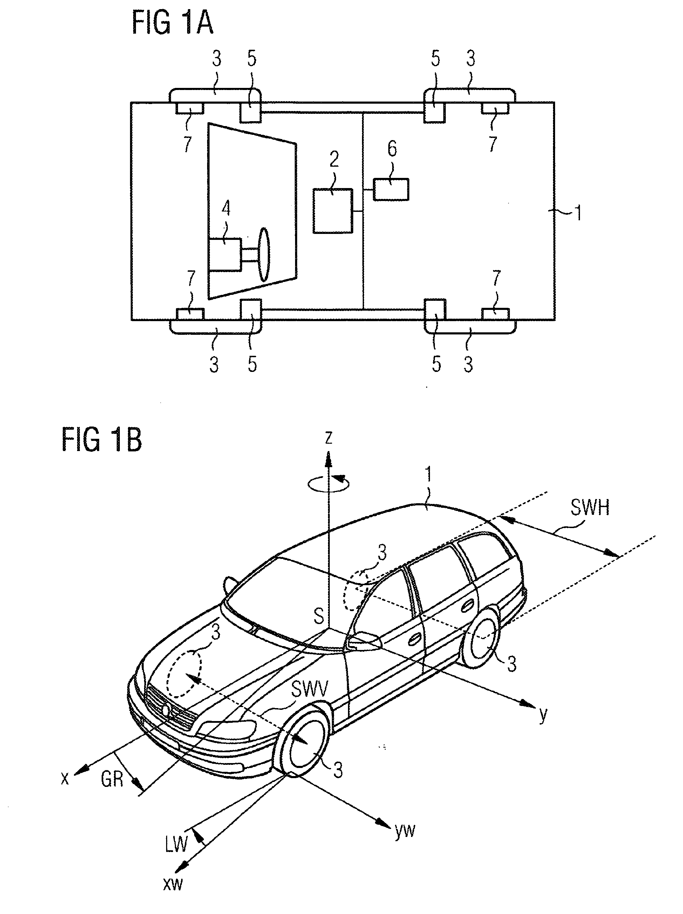

Figur 1A zeigt in einem schematischen Aufbau ein Fahrzeug 1 mit einer Steuervorrichtung 2, die auch als Vorrichtung zum Betreiben des Fahrzeugs 1 bezeichnet werden kann.

Das Fahrzeug weist vier Räder 3 mit vier zugehörigen Radsensoren 5 und ein Lenkrad 4 auf. Die Radsensoren 5 sind mit der Steuervorrichtung 2 verbunden, beispielsweise über ein Anschlusskabel oder einen Controller-Area-Network-Bus.

Die Steuervorrichtung 2 weist einen Mikrocomputer und einen Speicher zum Speichern eines Programmcodes auf. Im Speicher ist ein Programm zum Betreiben des Fahrzeugs 1 gespeichert und wird während des Betriebs des Fahrzeugs 1 vom Mikrocomputer abgearbeitet.

Das Fahrzeug weist einen Gierratensensor 6 und Lenkwinkelsensoren 7 für die Vorder-/Hinterräder des Fahrzeugs auf. Der Gierratensensor 6 erfasst die Gierrate GR des Fahrzeugs 1 und die Lenkwinkelsensoren 7 erfassen den Lenkwinkel LW des jeweiligen Rades. Siehe auch Figur 1B.

Die vom Gierratensensor 6 und von den Lenkwinkelsensoren 7 der Vorder-/Hinterräder erfassten Messsignale werden an die Steuervorrichtung 2 weitergeleitet. Idealerweise ist der Gierratensensor 6 im Schwerpunktskoordinatensystem des Fahrzeugs 1 positioniert.

Die Messsignale der Radsensoren 3 sind repräsentativ für die winkelgeschwindigkeiten der Räder 3 des Fahrzeugs 1. Die Steuervorrichtung 2 ist dazu ausgebildet, abhängig von den jeweiligen Messsignalen charakteristische Werte V1, V2, H1, H2 für die Winkelgeschwindigkeiten der Räder 3 zu erfassen. Die Radsensoren 5 sind beispielsweise Raddrehzahlsensoren und die charakteristischen Werte V1, V2, H1, H2 entsprechen beispielsweise den Raddrehzahlen.

Die Steuervorrichtung 2 ist dazu ausgebildet die charakteristischen Werte V1, V2, H1, H2 für die Winkelgeschwindigkeiten der Räder 3 des Fahrzeugs 1 in ein gemeinsames Bezugskoordinatensystem zu transformieren und einen gemeinsamen Bezugswert BW zu ermitteln. Aus den transformierten charakteristischen Werten TV1, TV2, TH1, TH2 und dem gemeinsamen Bezugswert BW werden Zwischenskalierungswerte ZV1, ZV2, ZH1, ZH2 ermittelt. Skalierungswerte SV1, SV2, SH1, SH2 werden individuell für jedes Rad 3 abhängig von den Zwischenskalierungswerten ZV1, ZV2, ZH1, ZH2 angepasst, falls vorgegebene Bedingungen erfüllt sind.

Vorgegebene Bedingungen sind erfüllt, wenn der Betrag der vom Gierratensensor 6 gemessenen Gierrate GR klein ist, das heißt das sich das Fahrzeug 1 beispielsweise nicht in einem Schleudervorgang befindet, bei dem der Betrag der Gierrate GR groß wäre. Beim Durchfahren einer Steilkurve, wäre der Betrag der vom Gierratensensor 6 erfassten Gierrate GR groß, sodass die vorgegebenen Bedingungen nicht erfüllt sind.

Ein normaler Betriebszustand des Fahrzeugs 1 ist auch gegeben, wenn sich das Fahrzeug 1 in einem normalen Betriebszustand befindet, worin der Betrag der Lenkwinkel LW, die von den Lenkwinkelsensoren 7 erfasst werden, klein ist. Ein normaler Betriebszustand ist beispielsweise nicht gegeben wenn das Fahrzeug 1 durch eine Kurve fährt. Dann sind die Beträge der von den Lenkwinkelsensoren 7 erfassten Lenkwinkel LW groß.

Die Skalierungswerte SV1, SV2, SH1, SH2 ermöglichen zum einen die Feststellung eines Radwechsels oder das Benutzen eines Reserverades. Des Weiteren ist anhand der Skalierungswerte SV1, SV2, SH1, SH2 eine genauere Ermittlung einer Längsgeschwindigkeit des Fahrzeugs 1 ermöglicht.

Figur 1B zeigt eine perspektivische Ansicht des Fahrzeugs 1 aus Figur 1A. Das Schwerpunktkoordinatensystem des Fahrzeugs 1 umfasst einen Schwerpunkt S und Koordinatenachsen für die Längsachse x, die Querachse y und die Hochachse z des Fahrzeugs 1. Das Fahrzeug 1 bewegt sich in Richtung positiver Längsachse x, worauf sich auch die Längsgeschwindigkeit des Fahrzeugs 1 bezieht. Die Gierrate GR, die vom Gierratensensor 6 erfasst wird, ist ein Maß für die Drehgeschwindigkeit um die Hochachse z des Fahrzeugs 1.

Die Räder 3 des Fahrzeugs 1 weisen ein eigenes Koordinatensystem mit einer Radlängsachse xw und einer Radquerachse yw auf. Der Lenkwinkel LW ist der Winkel zwischen der Radlängsachse xw und der Längsachse x des Fahrzeugs 1.

Das Fahrzeug 1 ist des Weiteren durch eine vordere Spurweite SWV, und eine hintere Spurweite SWH gekennzeichnet. Die vordere Spurweite SWV des Fahrzeugs 1 ist der Abstand zwischen den Radaufstandpunkten der beiden Räder 3 einer vorderen Fahrzeugachse. Die hintere Spurweite SWH des Fahrzeugs 1 ist der Abstand zwischen den Radaufstandpunkten der beiden Räder 3 einer hinteren Fahrzeugachse.

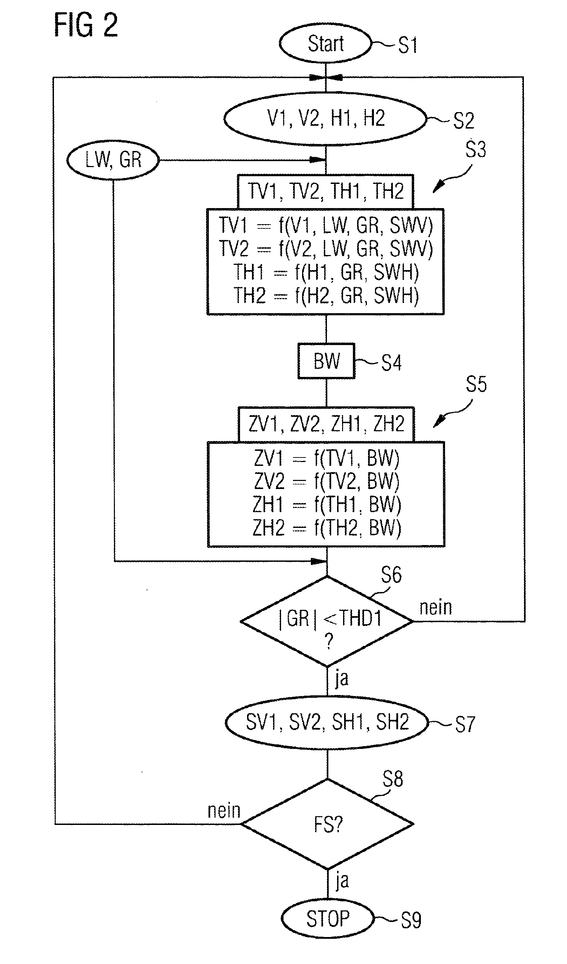

Figur 2 zeigt ein Flussdiagramm eines Programms zum Betreiben eines Fahrzeugs 1. Das Programm ist in einem Programmspeicher einer Vorrichtung zum Betreiben des Fahrzeugs 1 gespeichert und wird während des Betriebs des Fahrzeugs 1 abgearbeitet.

Das Programm wird in einem Schritt S1 gestartet und während des Betriebs des Fahrzeugs 1 wiederholt ausgeführt. In einem Schritt S2 des Verfahrens werden jeweilige charakteristische Werte V1, V2, für die Winkelgeschwindigkeit der Vorderräder und jeweilige charakteristische Werte H1, H2 für die Winkelgeschwindigkeit der Hinterräder des Fahrzeugs 1 erfasst. In diesem Ausführungsbeispiel entsprechen die charakteristischen Werte V1, V2 für die Winkelgeschwindigkeit der Vorderräder und die charakteristischen Werte H1, H2 für die Winkelgeschwindigkeit der Hinterräder den Raddrehzahlen der jeweiligen Räder 3 des Fahrzeugs 1.

In einem Schritt S3 werden die charakteristischen Werte V1, V2, H1, H2 für die Winkelgeschwindigkeit der Vorderräder bzw. der Hinterräder in ein gemeinsames Bezugskoordinatensystem des Fahrzeugs 1 transformiert. Das gemeinsame Bezugskoordinatensystem ist beispielsweise das Schwerpunktskoordinatensystem des Fahrzeugs 1.

Die Transformation im Schritt S3 ist unterschiedlich für die Vorder- bzw. Hinterräder des Fahrzeugs 1. Der transformierte charakteristische Wert TV1, TV2 für das jeweilige Vorderrad des Fahrzeugs 1 ist eine Funktion des charakteristischen Wertes V1, V2 für die Winkelgeschwindigkeit des jeweiligen Vorderrades, des Lenkwinkels LW des Vorderrades und/oder der Gierrate GR und der vordere Spurweite SWV des Fahrzeugs 1: TV1 = f(V1,LW,GR,SWV) = V1 * cos(LW) +/- ½ * SWV * GR; TV2 = f(V2,LW,GR,SWV) = V2 * cos(LW) -/+ ½ * SWV * GR. Der transformierte charakteristische Wert TV1, TV2 für das jeweilige Vorderrad des Fahrzeugs 1 wird durch Multiplikation des charakteristischen Wertes V1, V2 mit dem Kosinus des Lenkwinkels LW des jeweiligen Vorderrades erreicht und die Hälfte der vorderen Spurweite SWV des Fahrzeugs 1 multipliziert mit der Gierrate GR wird dazuaddiert.

Der transformierte charakteristische Wert TH1, TH2 für die Winkelgeschwindigkeit des jeweiligen Hinterrades des Fahrzeugs 1 ist eine Funktion des charakteristischen Wertes H1, H2 für die Winkelgeschwindigkeit des jeweiligen Hinterrades, der Gierrate GR und der hinteren Spurweite SWH des Fahrzeugs 1: TH1 = f(H1,GR,SWH) = H1 +/- ½ * SWH * GR; TH2 = f(H2,GR,SWH) = H2 -/+ ½ * SWH * GR. Bei der Berechnung der transformierten charakteristischen Werte TH1, TH2 für die Winkelgeschwindigkeit des jeweiligen Hinterrades des Fahrzeugs 1 wird der Lenkwinkel LW nicht berücksichtigt, weil in diesem Ausführungsbeispiel die Hinterräder nicht gelenkt sind. Ist beispielsweise eine Lenkung der Hinterräder des Fahrzeugs 1 vorgesehen, sollte der Lenkwinkel LW des Hinterrades berücksichtigt werden. Daher ergibt sich für die Berechnung des transformierten charakteristischen Wertes TH1, TH2 für die Winkelgeschwindigkeit des jeweiligen Hinterrades des Fahrzeugs 1 eine Summe aus dem charakteristischen Wert H1, H2 für die Winkelgeschwindigkeit des jeweiligen Hinterrades und der halben hinteren Spurweite SWH, die mit der Gierrate GR multipliziert ist.

Aus den transformierten Raddrehzahlen TV1, TV2, TH1, TH2 wird in einem Schritt S4 ein gemeinsamer Bezugswert BW ermittelt.

In einem Schritt S5 werden jeweilige Zwischenskalierungswerte ZV1, ZV2, ZH1, ZH2 für jedes Rad 3 ermittelt. Die Zwischenskalierungswerte ZV1, ZV2, ZH1, ZH2 für die jeweiligen Räder 3 sind abhängig vom jeweiligen Verhältnis der zugeordneten transformierten charakteristischen Werte TV1, TV2, TH1, TH2 und des gemeinsamen Bezugswertes BW. Beispielsweise ist der Skalierungswert ZV1 gleich dem Verhältnis gebildet aus dem transformierten charakteristischen Wert TV1 zum gemeinsamen Bezugswert BW.

In einem weiteren Schritt S6 wird festgestellt, ob vorgegebene Bedingungen erfüllt sind. Eine vorgegebene Bedingung ist dann erfüllt, wenn der Betrag der Gierrate GR des Fahrzeugs 1 kleiner als ein erster Schwellenwert THD1 ist. In diesem Schritt ist es auch möglich zu prüfen, ob der Betrag des Lenkwinkels LW kleiner als ein zweiter Schwellenwert ist, oder es können beide, der Betrag der Gierrate GR und der Betrag des Lenkwinkels LW geprüft werden, ob sie kleiner als ein erster bzw. zweiter Schwellenwert sind.

Wird im Schritt S6 festgestellt, dass die vorgegebene Bedingung erfüllt ist, werden die Skalierungswerte SV1, SV2, SH1, SH2 in einem Schritt S7 abhängig von den vorher ermittelten Zwischenskalierungswerten ZV1, ZV2, ZH1, ZH2 angepasst. Beispielsweise werden die Skalierungswerte SV1, SV2, SH1, SH2 über eine gleitende Mittelwertbildung angepasst, bei der abhängig von einem zu wählenden Wichtungswert je ein Skalierungswert SV1, SV2, SH1, SH2 unter Berücksichtigung des zugeordneten Zwischenskalierungswerts ZV1, ZV2, ZH1, ZH2 angepasst wird.

Befindet sich das Fahrzeug 1 zeitnah nach dem Fahrzeugstart, erfolgt eine stärkere Anpassung der Skalierungswerte SV1, SV2, SH1, SH2 als nach einer vorgegebenen Zeitdauer nach dem Fahrzeugstart. Dies ermöglicht, dass beispielsweise ein Radwechsel oder das Benutzen eines Reserverades sehr schnell nach dem Start ermittelt wird.

Wird im Schritt S6 festgestellt, dass die vorgegebene Bedingung nicht erfüllt ist, werden die Skalierungswerte SV1, SV2, SH1, SH2 nicht aktualisiert und ein erneuter Durchlauf des Programms wird wiederholt angefangen mit dem Erfassen der charakteristischen Werte V1, V2, H1, H2 für die Winkelgeschwindigkeit des jeweiligen Rades 3 im Schritt S2 des Flussdiagramms.

Die Überprüfung, ob der Betrag der Gierrate GR und/oder der Betrag des Lenkwinkels LW kleiner als ein erster Schwellenwert THD1 bzw. zweiter Schwellenwert ist, verhindert das Ermitteln der Skalierungswerte SV1, SV2, SH1, SH2, wenn sich das Fahrzeug 1 in einem besonderen Fahrverhalten befindet. Dies kann beispielsweise dann eintreten, wenn das Fahrzeug 1 durch eine enge Kurve fährt und der Betrag der Gierrate GR wie auch der Betrag des Lenkwinkels LW einen vergleichsweise großen Wert aufweisen. Befindet sich das Fahrzeug 1 beispielsweise in einem Schleudervorgang mit großem Betrag der Gierrate GR, liegt ein besonderes Fahrverhalten vor und eine Anpassung der Skalierungswerte SV1, SV2, SH1, SH2, soll nicht erfolgen.

Das Programm wird bevorzugt so lange wiederholt, bis in einem Schritt S8 ein Fahrzeugstop FS festgestellt wird. Bei einem Fahrzeugstop erfolgt in einem Schritt S9 das Beenden des Programms.

Beim Ermitteln der transformierten Raddrehzahlen TV1, TV2, TH1, TH2 im Schritt S3 und/oder des gemeinsamen Bezugswertes BW im Schritt S4 und/oder der Zwischenskalierungswerte ZV1, ZV2, ZH1, ZH2 im Schritt S5 werden diese bevorzugt tiefpassgefiltert. Beispielsweise kann dies über eine gleitende Mittelwertbildung erfolgen, bei der abhängig von einem zu wählenden Wichtungswertes a, der Mittelwert bei jedem Durchlauf erneut ermittelt wird.

Sei G die zu mittelnde Größe, und MVA der Mittelwert in einem vorhergehenden Durchlauf, dann ist der Mittelwert MV = a * MVA + (1-a) * G. Durch die Wahl des Wichtungswertes a kann der Mittelwert MV der zu mittelnden Größe G bei fortlaufendem Durchlaufen des Verfahrens stärker oder schwächer verändert werden.

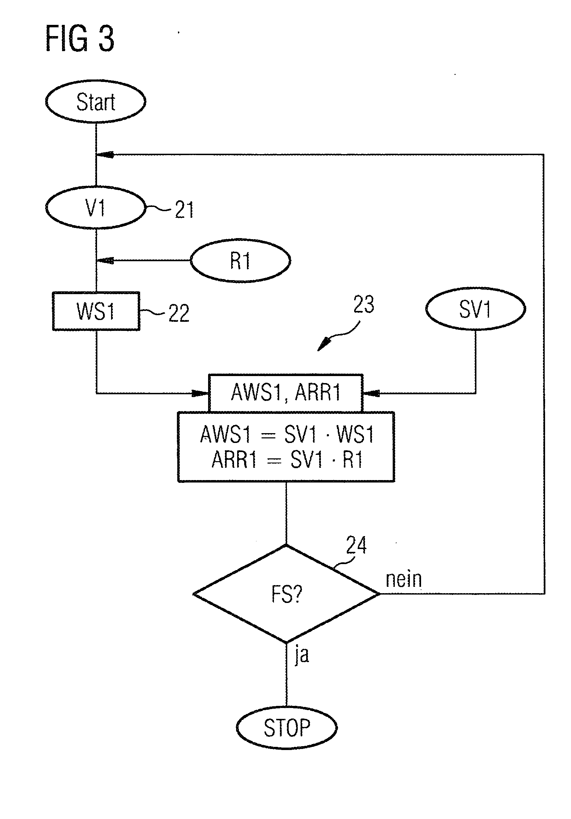

Figur 3 zeigt in einem Flußdiagramm ein weiteres Programm zum Betreiben des Fahrzeugs 1. Dieses weitere Programm ist zum Betreiben eines Fahrzeugs 1 mit mehreren Rädern 3 vorgesehen und wird bevorzugt quasi-parallel zum ersten Programm abgearbeitet.

In diesem Ausführungsbeispiel werden die Skalierungswerte SV1, SV2, SH1, SH2, für die vier Räder 3 des Fahrzeugs 1 wie im ersten Ausführungsbeispiel angepasst. Zum einfacheren Verständnis wird der Ablauf des Programms für nur ein Rad 3 des Fahrzeugs 1 detailliert ausgeführt. Der Ablauf bezüglich der anderen Räder 3 des Fahrzeugs 1 korrespondiert jedoch dazu.

In einem Schritt 21 wird ein charakteristischer Wert V1 für die Winkelgeschwindigkeit des Rades 3 erfasst. In einem Schritt 22 wird durch Multiplikation des charakteristischen Wertes V1 mit einem angenommenen Bezugsradius R1 des Rades 3, eine Radgeschwindigkeit WS1 des Rades 3 ermittelt.

In einem Schritt 23 wird die ermittelte Radgeschwindigkeit WS1 mit dem Skalierungswert SV1 multipliziert. Aus dem Produkt werden zwei Größen ermittelt: eine angepasste relative Radgeschwindigkeit AWS1 und ein angepasster relativer Radradius ARR1.

In einem Schritt 24 wird überprüft, ob ein Fahrzeugstop FS vorliegt. Liegt ein Fahrzeugstop FS nicht vor, wird das Programm, angefangen mit dem Erfassen des charakteristischen Wertes V1 für die Winkelgeschwindigkeit des Rades 3, im Schritt 21 wiederholt. Stoppt das Fahrzeug wird das Programm beendet.

Anhand der angepassten relativen Radgeschwindigkeit AWS1 oder der angepassten relativen Radradien ARR1 für alle Räder 3 des Fahrzeugs 1 kann die Genauigkeit der Ermittlung der Längsgeschwindigkeit des Fahrzeugs 1 erhöht werden. Dafür ist es nötig, die Radradien R1 aller Räder 3 des Fahrzeugs 1 individuell anzupassen.

Des Weiteren ist es möglich, anhand der angepassten relativen Radradien ARR1 festzustellen, ob bei zumindest einem der Räder 3 ein Druckverlust auftritt. Diese Information kann an einen Benutzer des Fahrzeugs 1, beispielsweise den Fahrzeugführer, weitergeleitet werden. Eine Abnutzung der Reifen der Räder 3 des Fahrzeugs 1 kann beispielsweise auch durch einen veränderten angepassten relativen Radradius ARR1 ermittelt werden.

Weitere Ausführungsbeispiele der Erfindung werden hier nicht weiter erläutert, sind aber von der Erfindung umfasst.

## Patentansprüche

1. Verfahren zum Betreiben eines Fahrzeugs (1) mit mehreren Rädern (3) und diesen zugeordneten Radsensoren (5), deren Messsignale repräsentativ sind für Winkelgeschwindigkeiten der jeweiligen Räder (3), bei dem
- abhängig von den jeweiligen Messsignalen jeweilige charakteristische Werte (V1, V2, H1, H2) für die Winkelgeschwindigkeit des jeweiligen Rades (3) erfasst werden,
- die charakteristischen Werte (V1, V2, H1, H2) in ein gemeinsames Bezugskoordinatensystem des Fahrzeugs (1) transformiert werden abhängig von zumindest einem des Lenkwinkels (LW) oder der Gierrate (GR),
- ein gemeinsamer Bezugswert (BW) abhängig von den transformierten charakteristischen Werten (TV1, TV2, TH1, TH2) ermittelt wird,
- abhängig von dem jeweiligen Verhältnis der transformierten charakteristischen Werte (TV1, TV2, TH1, TH2) und des Bezugswertes (BW) jeweilige Zwischenskalierungswerte (ZV1, ZV2, ZH1, ZH2) ermittelt werden,
- jeweilige Skalierungswerte (SV1, SV2, SH1, SH2) abhängig von den Zwischenskalierungswerten (ZV1, ZV2, ZH1, ZH2) angepasst werden, wenn eine vorgegebene Bedingung erfüllt ist, die abhängt von der Gierrate (GR) und/oder dem Lenkwinkel (LW).

2. Verfahren nach Anspruch 1,
bei dem die jeweiligen Skalierungswerte (SV1, SV2, SH1, SH2) zeitnah zu einem Fahrzeugstart abhängig von den jeweiligen Zwischenskalierungswerten (ZV1, ZV2, ZH1, ZH2) stärker angepasst werden als nach einer vorgegebenen Zeitdauer nach dem Fahrzeugstart.

3. Verfahren nach Anspruch 1,
bei dem die transformierten charakteristischen Werte (TV1, TV2, TH1, TH2) für die Winkelgeschwindigkeit des jeweiligen Rades (3) tiefpassgefiltert werden und der gemeinsame Bezugswert (BW) abhängig von den tiefpassgefilterten transformierten charakteristischen Werten (TV1, TV2, TH1, TH2) ermittelt wird.

4. Verfahren nach Anspruch 1,
bei dem die gemeinsamen Bezugswerte (BW) tiefpassgefiltert werden und abhängig von dem jeweiligen Verhältnis der transformierten charakteristischen Werte (TV1, TV2, TH1, TH2) für die Winkelgeschwindigkeit des jeweiligen Rades und des tiefpassgefilterten Bezugswertes (BW) jeweilige Zwischenskalierungswerten (ZV1, ZV2, ZH1, ZH2) ermittelt werden.

5. Verfahren nach Anspruch 1,
bei dem die gemeinsamen Bezugswerte (BW) tiefpassgefiltert werden und abhängig von dem jeweiligen Verhältnis der tiefpassgefilterten transformierten charakteristischen Werte (TV1, TV2, TH1, TH2) und des tiefpassgefilterten Bezugswertes (BW) jeweilige Zwischenskalierungswerten (ZV1, ZV2, ZH1, ZH2) ermittelt werden.

6. Verfahren nach einem der vorherigen Ansprüche,
bei dem das Bezugskoordinatensystem des Fahrzeugs (1) ein Schwerpunktkoordinatensystem des Fahrzeugs (1) ist.

7. Verfahren nach einem der vorherigen Ansprüche,
bei dem die vorgegebene Bedingung erfüllt ist, wenn der Betrag der Gierrate (GR) des Fahrzeugs (1) kleiner als ein vorgegebener erster Schwellenwert (THD1) ist.

8. Verfahren nach einem der vorherigen Ansprüche,
bei dem die vorgegebenen Bedingungen erfüllt sind, wenn der Betrag des Lenkwinkels (LW) des Fahrzeugs (1) kleiner als ein vorgegebener zweiter Schwellenwert ist.

9. Verfahren nach einem der vorherigen Ansprüche,
bei dem abhängig von dem jeweiligen Skalierungswert (SV1, SV2, SH1, SH2) und dem zugeordneten charakteristischen Wert (V1, V2, H1, H2) für die Winkelgeschwindigkeit des jeweiligen Rades (3) eine skalierte Radgeschwindigkeit ermittelt wird.

10. Verfahren nach Anspruch 1,
bei dem abhängig von den jeweiligen Skalierungswerten (SV1, SV2, SH1, SH2) ermittelt wird, ob zumindest eines der Räder (3) ein Reserverad ist.

11. Verfahren nach Anspruch 1,
bei dem abhängig von den jeweiligen Skalierungswerten (SV1, SV2, SH1, SH2) ermittelt wird, ob bei zumindest einem der Räder (3) ein Druckverlust auftritt.

12. Vorrichtung zum Betreiben eines Fahrzeugs (1) mit mehreren Rädern (3) und diesen zugeordneten Radsensoren (5), deren Messsignale repräsentativ sind für Winkelgeschwindigkeiten der jeweiligen Räder (3), die dazu eingerichtet ist
- abhängig von den jeweiligen Messsignalen jeweilige charakteristische Werte (V1, V2, H1, H2) für die Winkelgeschwindigkeit des jeweiligen Rades (3) zu erfassen,
- die charakteristischen Werte (V1, V2, H1, H2) in ein gemeinsames Bezugskoordinatensystem des Fahrzeugs (1) zu transformieren abhängig von zumindest einem des Lenkwinkels (LW) oder der Gierrate (GR),
- einen gemeinsamen Bezugswert (BW) abhängig von den transformierten charakteristischen Werten (TV1, TV2, TH1, TH2) zu ermitteln,
- abhängig vom jeweiligen Verhältnis der transformierten charakteristischen Werte (TV1, TV2, TH1, TH2) und des Bezugswertes jeweilige Zwischenskalierungswerten (ZV1, ZV2, ZH1, ZH2) zu ermitteln,
- jeweilige Skalierungswerte (SV1, SV2, SH1, SH2) abhängig von den Zwischenskalierungswerten (ZV1, ZV2, ZH1, ZH2) anzupassen, wenn eine vorgegebene Bedingung erfüllt ist, die abhängt von der Gierrate (GR) und/oder dem Lenkwinkel (LW).

## Claims

1. Method for operating a vehicle (1) having a plurality of wheels (3) and wheel sensors (5) which are associated with said wheels and whose measurement signals are representative of angular speeds of the respective wheels (3), in which
- respective characteristic values (V1, V2, H1, H2) are registered for the angular speed of the respective wheel (3) depending on the respective measurement signals,
- the characteristic values (V1, V2, H1, H2) in a common reference coordinates system of the vehicle (1) are transformed depending on at least one of steering angle (LW) or the yaw rate (GR),
- a common reference value (BW) is determined depending on the transformed characteristic values (TV1, TV2, TH1, TH2),
- respective intermediate scaling values (ZV1, ZV2, ZH1, ZH2) are determined depending on the respective ratio of the transformed characteristic values (TV1, TV2, TH1, TH2) and of the reference value (BW),
- respective scaling values (SV1, SV2, SH1, SH2) are adapted depending on the intermediate scaling values (ZV1, ZV2, ZH1, ZH2) when a predefined condition, which is dependent upon the yaw rate (GR) and/or upon the steering angle (LW), is met.

2. Method according to claim 1,
in which the respective scaling values (SV1, SV2, SH1, SH2), depending on the respective intermediate scaling values (ZV1, ZV2, ZH1, ZH2), are subject to greater adaptation at the time of a vehicle start-up than after a predefined period following the vehicle start-up.

3. Method according to claim 1,
in which the transformed characteristic values (TV1, TV2, TH1, TH2) for the angular speed of the respective wheel (3) are low-pass filtered and the common reference value (BW) is determined depending on the low-pass filtered, transformed characteristic values (TV1, TV2, TH1, TH2).

4. Method according to claim 1,
in which the common reference values (BW) are low-pass filtered and respective intermediate scaling values (ZV1, ZV2, ZH1, ZH2) are determined depending on the respective ratio of the transformed characteristic values (TV1, TV2, TH1, TH2) for the angular speed of the respective wheel and of the low-pass filtered reference value (BW).

5. Method according to claim 1,
in which the common reference values (BW) are low-pass filtered and respective intermediate scaling values (ZV1, ZV2, ZH1, ZH2) are determined depending on the respective ratio of the low-pass filtered, transformed characteristic values (TV1, TV2, TH1, TH2) and of the low-pass filtered reference value (BW).

6. Method according to one of the above claims,
in which the reference coordinates system of the vehicle (1) is a barycentric coordinates system of the vehicle (1).

7. Method according to one of the above claims,
in which the predefined condition is met when the yaw rate (GR) of the vehicle (1) is lower than a predefined first threshold value (THD1).

8. Method according to one of the above claims,
in which the predefined conditions are met when the steering angle (LW) of the vehicle (1) is lower than a predefined second threshold value.

9. Method according to one of the above claims,
in which a scaled wheel speed is determined depending on the respective scaling value (SV1, SV2, SH1, SH2) and on the assigned characteristic value (V1, V2, Hl, H2) for the angular speed of the respective wheel (3).

10. Method according to claim 1,
in which, depending on the respective scaling values (SV1, SV2, SH1, SH2), it is ascertained whether at least one of the wheels (3) is a spare wheel.

11. Method according to claim 1,
in which, depending on the respective scaling values (SV1, SV2, SH1, SH2), it is determined whether at least one of the wheels (3) has lost pressure.

12. Apparatus for operating a vehicle (1) having a plurality of wheels (3) and wheel sensors (5) which are associated with said wheels and whose measurement signals are representative of angular speeds of the respective wheels (3), said apparatus being designed
- depending on the respective measurement signals for registering respective characteristic values (V1, V2, Hl, H2) for the angular speed of the respective wheel (3),
- for transforming the characteristic values (V1, V2, Hl, H2) into a common reference coordinates system of the vehicle (1) depending on at least one of steering angle (LW) or the yaw rate (GR),
- for determining a common reference value (BW) depending on the transformed characteristic values (TV1, TV2, TH1, TH2),
- for determining respective intermediate scaling values (ZV1, ZV2, ZH1, ZH2) depending on the respective ratio of the transformed characteristic values (TV1, TV2, TH1, TH2) and of the reference value,
- for adapting respective scaling values (SV1, SV2, SH1, SH2) depending on the intermediate scaling values (ZV1, ZV2, ZH1, ZH2) when a predefined condition is met, said condition being dependent upon the yaw rate and/or the steering angle (LW).

## Revendications

1. Procédé pour l'exploitation d'un véhicule (1) comportant plusieurs roues (3) et des capteurs de roue (5) qui y sont associés et dont les signaux de mesure représentent les vitesses angulaires des roues respectives (3), procédé qui consiste à
- déterminer des valeurs caractéristiques (V1, V2, H1, H2) de la vitesse angulaire de chaque roue respective (3) en fonction des signaux de mesure correspondants,
- transformer les valeurs caractéristiques (V1, V2, H1, H2) dans un système de coordonnées de référence commun du véhicule (1) en fonction d'au moins l'angle de braquage (LW) ou le taux de lacet (GR),
- déterminer une valeur de référence commune (BW) en fonction des valeurs caractéristiques transformées (TV1, TV2, TH1, TH2),
- déterminer en fonction du rapport respectif entre les valeurs caractéristiques transformées (TV1, TV2, TH1, TH2) et la valeur de référence (BW) des valeurs d'échelle intermédiaire respectives (ZV1, ZV2, ZH1, ZH2),
- adapter en fonction des valeurs d'échelle intermédiaires (ZV1, ZV2, ZH1, ZH2) des valeurs d'échelle respectives (SV1, SV2, SH1, SH2) lorsqu'une condition prédéterminée est satisfaite, cette condition dépendant du taux de lacet (GR) et/ou de l'angle de braquage (LW).

2. Procédé selon la revendication 1, au cours duquel les valeurs d'échelle respectives (SV1, SV2, SH1, SH2) sont adaptées davantage en fonction des valeurs d'échelle intermédiaire respectives (ZV1, ZV2, ZH1, ZH2) immédiatement après un démarrage du véhicule, qu'elles ne le sont après une durée prédéterminée comptée à partir du démarrage du véhicule.

3. Procédé selon la revendication 1, au cours duquel les valeurs transformées (TV1, TV2, TH1, TH2) caractéristiques de la vitesse angulaire de chaque roue respective (3) sont soumises à un filtrage passe-bas et la valeur de référence commune (BW) est fournie en fonction des valeurs caractéristiques transformées (TV1, TV2, TH1, TH2) soumises au filtrage passe-bas.

4. Procédé selon la revendication 1, au cours duquel les valeurs de référence communes (BW) sont soumises à un filtrage passe-bas et des valeurs d'échelle intermédiaire respectives (ZV1, ZV2, ZH1, ZH2) sont fournies en fonction du rapport respectif entre les valeurs transformées (TV1, TV2, TH1, TH2) caractéristiques de la vitesse angulaire de la roue respective et la valeur de référence (BW) soumise au filtrage passe-bas.

5. Procédé selon la revendication 1, au cours duquel les valeurs de référence communes (BW) sont soumises à un filtrage passe-bas et des valeurs d'échelle intermédiaire respectives (ZV1, ZV2, ZH1, ZH2) sont fournies en fonction du rapport respectif entre les valeurs caractéristiques transformées (TV1, TV2, TH1, TH2) soumises à un filtrage passe-bas et la valeur de référence (BW) soumise au filtrage passe-bas.

6. Procédé selon l'une des revendications précédentes, dans lequel le système de coordonnées de référence du véhicule (1) est un système de coordonnées du centre de gravité du véhicule (1).

7. Procédé selon l'une des revendications précédentes, dans lequel la condition prédéterminée est satisfaite lorsque le taux de lacet (GR) du véhicule (1) est inférieur à une première valeur de seuil prédéterminée (THD1).

8. Procédé selon l'une des revendications précédentes, dans lequel les conditions prédéterminées sont satisfaites lorsque la valeur de l'angle de braquage (LW) du véhicule (1) est inférieure à une seconde valeur de seuil prédéterminée.

9. Procédé selon l'une des revendications précédentes, au cours duquel une vitesse de roue mise à l'échelle est fournie en fonction de chaque valeur d'échelle (SV1; SV2, SH1, SH2) et de la valeur associée (V1, V2, H1, H2) caractéristique de la vitesse angulaire de la roue respective (3).

10. Procédé selon la revendication 1, au cours duquel on détermine si au moins l'une des roues (3) est une roue de secours en fonction des valeurs d'échelle respectives (SV1, SV2, SH1, SH2).

11. Procédé selon la revendication 1, au cours duquel on détermine si une perte de pression se produit dans au moins l'une des roues (3) en fonction des valeurs d'échelle respectives (SV1, SV2, SH1, SH2).

12. Dispositif pour l'exploitation d'un véhicule (1) comportant plusieurs roues (3) et des capteurs de roue (5) qui y sont associés et dont les signaux de mesure représentent les vitesses angulaires des roues respectives (3), dispositif qui est agencé de façon à
- déterminer des valeurs caractéristiques (V1, V2, H1, H2) de la vitesse angulaire de chaque roue respective (3) en fonction des signaux de mesure correspondants,
- transformer les valeurs caractéristiques (V1, V2, H1, H2) dans un système de coordonnées de référence commun du véhicule (1) en fonction d'au moins l'angle de braquage (LW) ou le taux de lacet (GR),
- déterminer une valeur de référence commune (BW) en fonction des valeurs caractéristiques transformées (TV1, TV2, TH1, TH2),
- déterminer en fonction du rapport respectif entre les valeurs caractéristiques transformées (TV1, TV2, TH1, TH2) et la valeur de référence des valeurs d'échelle intermédiaire respectives (ZV1, ZV2, ZH1, ZH2),
- adapter en fonction des valeurs d'échelle intermédiaire (ZV1, ZV2, ZH1, ZH2) des valeurs d'échelle respectives (SV1, SV2, SH1, SH2) lorsqu'une condition prédéterminée est satisfaite, cette condition dépendant du taux de lacet (GR) et/ou de l'angle de braquage (LW).
